# EUROPÄISCHE PATENTSCHRIFT

(11) **EP 2 652 376 B1**
(45) Veröffentlichungstag und Bekanntmachung des Hinweises auf die Patenterteilung: **24.08.2016**
(21) Anmeldenummer: 11785385.3
(22) Anmeldetag: 15.11.2011
(51) Int. Cl.: F16K 27/02, F16K 31/06

(54) **ELEKTROMAGNETVENTIL**
SOLENOID VALVE
ÉLECTROVANNE

(30) Priorität: 17.12.2010 DE 102010055033
(43) Veröffentlichungstag der Anmeldung: 23.10.2013
(73) Patentinhaber: Pierburg GmbH, 41460 Neuss (DE)
(72) Erfinder: SCHNELKER, Franz-Josef, 41470 Neuss (DE); BUSE, Werner, 41564 Kaarst (DE); SADOWSKI, Christoph, 44866 Bochum (DE); LAPPAN, Rolf, 50733 Köln (DE); DOHRMANN, Rolf, 41564 Kaarst (DE)
(74) Vertreter: Patentanwälte ter Smitten Eberlein Rütten Partnerschaftsgesellschaft
(86) Internationale Anmeldenummer: PCT/EP2011/070123
(87) Internationale Veröffentlichungsnummer: WO 2012/079891

(56) Entgegenhaltungen:
- WO-A1-2008/147954
- JP-A- 8 105 563
- JP-A- 2000 002 343
- US-A1- 2002 145 125
- US-A1- 2010 019 186

## Beschreibung

Die Erfindung betrifft ein Elektromagnetventil mit einem Gehäuse, in dem eine auf ein Spulenträger gewickelte Spule, ein Anker, ein Kern und eine mehrteilige Rückschlussanordnung angeordnet sind, die einen elektromagnetischen Kreis bilden, wobei der bewegliche Anker über Lagermittel in dem Spulenträger gelagert ist und direkt oder indirekt auf mindestens ein Ventilverschlussglied einwirkt, wobei das Ventilverschlussglied auf mindestens einen, einer Ventilhülse angeordneten Ventilsitz angreift, wobei der Kern an einer der Ventilhülse entgegengesetzten Seite des Gehäuses angeordnet ist und der Anker aus mehreren Teilstücken aufgebaut ist, wobei ein erstes, zum Kern gerichtetes Teilstück einen größeren Durchmesser aufweist, als der Innendurchmesser eines Teilbereiches des Spulenträgers, wobei der Spulenträger an einer dem Kern entgegengesetzten Seite eine Aufnahmebuchse für die Ventilhülse aufweist, wobei der Spulenträger und die Aufnahmebuchse einstückig ausgeführt sind.

Für Elektromagnetventile sind viele unterschiedliche Anwendungsbereiche in Verbrennungskraftmaschinen bekannt. So werden Elektromagnetventile sowohl in pneumatischen als auch in hydraulischen Kreisen in Fahrzeugen eingesetzt, wie zum Beispiel in Bremsanlagen, Bremssystemen oder auch Einspritzanlagen. Des Weiteren können sie zur Regelung des Druckes bei pneumatischen Stellern verwendet werden oder beispielsweise als Schubumluftventile bei Turboladern. Je nach Einsatzbereich sind diese Elektromagnetventile entweder als Auf-/Zu-Ventile oder aber als Proportionalregelventile ausgeführt.

Um die grundsätzliche Anordnung eines Elektromagnetventils auf einfache Weise den unterschiedlichen Anwendungsbereichen anpassen zu können, offenbart die WO 2007/065566 A1 ein Ventilbaukastensystem mit einem elektromagnetisch betätigten Ventil, bei dem im Wesentlichen eine besondere Ausrichtung und Ausgestaltung des Kernes im Spulenträger vorgestellt wird. Die in dieser Druckschrift vorgestellte Anordnung des Kernes erscheint jedoch vor dem Hintergrund einer automatisierten Fertigung sehr kostenaufwendig und ist nicht geeignet für eine Unterscheidung in eine automatisierte Vormontage des elektromagnetischen Kreises und der Endmontage mit den anwendungsspezifischen Bauteilen. Des Weiteren sind aus den Druckschriften JP 8 105563 A, US 2002/145125 A1 und JP 2000 002343 A Elektromagnetventile bekannt, bei denen sich der Anker aus mehreren Teilstücken zusammensetzt, wobei ein erstes zum Kern gerichtetes Teilstück einen größeren Durchmesser aufweist als der Innendurchmesser eines weiteren Teilstückes. Aus der WO 2008/147954 A1 ist ein gattungsgemäßes Elektromagnetventil bekannt.

Es ist daher Aufgabe der Erfindung, ein Elektromagnetventil bereitzustellen, das die oben genannten Nachteile vermeidet.

Diese Aufgabe wird durch ein Elektromagnetventil dadurch gelöst, dass ein Ventilstößel über eine Steckverbindung mit dem Anker verbindbar ist und der Ventilstößel in der Ventilhülse läuft. Auf diese Weise wird ein Elektromagnetventil geschaffen, dessen elektromagnetischer Kreis im Wesentlichen in einer Vormontage hergestellt werden kann und das dann bei der Endmontage mit den anwendungsspezifischen Bauteilen versehen werden kann. Hierbei ist es montagetechnisch besonders vorteilhaft, wenn zumindest Teile der Rückschlussanordnung im Spulenträger angeordnet sind. Auch ist es vorteilhaft, wenn ein vom Anker entgegengesetzter Bereich des Kernes einen größeren Durchmesser aufweist, als ein im Ventilverschlussglied entgegengesetzter Bereich des Spulenträgers.

In vorteilhafter Weise kann die Steckverbindung auch einstellbar sein.

Die Aufnahmebuchse und die Ventilhülse sind vorteilhafter Weise mittels einer Schweißverbindungsstelle miteinander zu verbinden.

Um auf einfache und kostengünstige Weise einen koaxialen Verlauf des Ankers im Elektromagnetventil zu gewährleisten, kann der Teilbereich des Spulenträgers eine Lagerbuchse für den Anker aufweisen. Auch ist es möglich, dass der Teilbereich des Spulenträgers als Lagerbereich für den Anker ausgebildet ist. Auf besonders vorteilhafte Weise ist der Spulenträger im Spritzgussverfahren hergestellt. Dabei kann der Spulenträger aus einem form- und temperaturstabilen Werkstoff, beispielsweise unter dem Markenzeichen Grivory HT2V 3HLV oder Grivory XE388 hergestellt sein.

Ausführungsbeispiele der Erfindung sind in der Zeichnung dargestellt und werden nachfolgend beschrieben.

Hierbei zeigt:
Figur 1 eine Schnittansicht eines erfindungsgemäßen Elektromagnetventils, und
Figur 2 eine Baugruppenzeichnung für unterschiedlich herzustellende Ausführungen von Elektromagnetventilen.

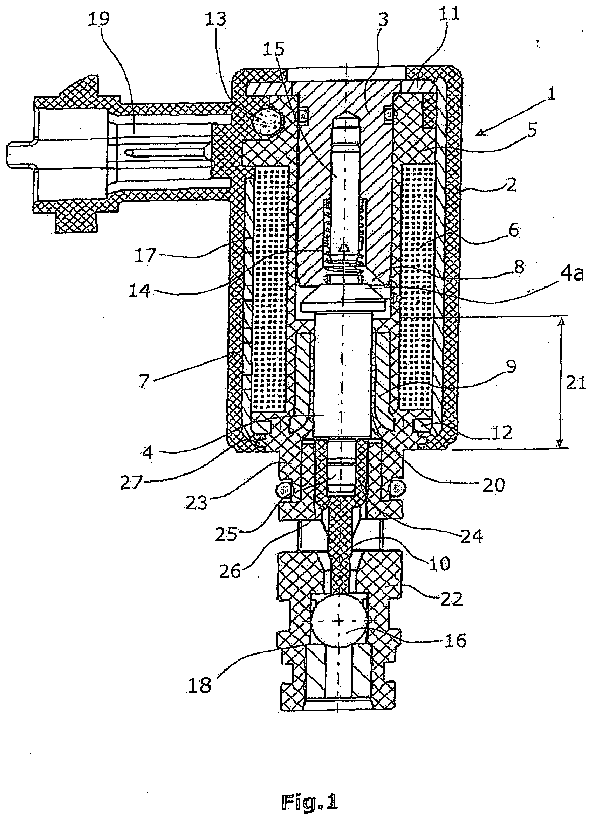

Figur 1 zeigt ein erfindungsgemäßes Elektromagnetventil 1 in einer Schnittansicht, das als Öldruckbegrenzungsventil eingesetzt wird. Dieses Elektromagnetventil 1 besteht aus einem Gehäuse 2, in dem ein Kern 3, ein Anker 4, ein Spulenträger 5, auf den eine Spule 6 gewickelt ist, und eine Rückschlussanordnung 7 angeordnet sind. Der Anker 4 ist im vorliegenden Fall über eine Steckverbindung 24 mit einem Ventilstößel 10 verbunden, der auf bekannte Weise auf ein Ventilverschlussglied 16 einwirkt. Dabei läuft der Ventilstößel 10 in einer Ventilhülse 22, die in einer an dem Kern 3 entgegengesetzten Seite des Spulenträgers 5 ausgebildeten Aufnahmebuchse 23 eingesetzt ist, wobei die Aufnahmebuchse 23 einstückig mit dem Spulenträger 5 verbunden ist.

Ein derartiges, von der Funktionsweise her bekanntes Elektromagnetventil funktioniert wie folgt: Im nicht bestromten Zustand steht zwischen dem Anker 4 und dem Kern 3 ein Spalt 8, in den bei Bestromen der Spule 6 ein magnetisches Feld erzeugt wird, welches eine Axialbewegung des Ankers 4 zur Folge hat. Entsprechend wird auch der mit dem Anker 4 verbundene Ventilstößel 10 bewegt und das Ventilverschlussglied 16 frei gegeben.

Im vorliegenden Ausführungsbeispiel ist ein Rückschlussinnenabschnitt 9, einteilig mit dem vom Kern 3 abgewandten Rückschlussdeckelabschnitt 12 ausgeführt und im Spulengehäuse 5 integriert angeordnet. Dabei wurden die Rückschlussinnen- und -deckelabschnitte 9, 12 bei der Herstellung des Spulenträgers 5 im Spritzgussverfahren mit eingegossen. Des Weiteren wurde bereits ein Endstörwiderstand 13 im Spulenträger 5 integriert vorgesehen. Auf diese Weise können wesentliche Bauteile während der Vormontage im Spulenträger 5 vorgesehen werden. Bei der Herstellung eines Standardspulenbauteiles muss dann lediglich die für die Ventilfunktion ausgewählte Wicklung 6 ausgewählt werden und auf den Spulenträger 5 aufgebracht werden. Nachdem der zweite Rückschlussdeckelabschnitt 11 angeordnet und der Rückschlussseitenabschnitt 17 derart in eine Pressverbindung mit den Rückschlussdeckelabschnitten 11, 12, gebracht, dass ein elektromagnetischer Kreis herstellbar ist und die Kontaktierung mit einem Elektrostecker 19 vorgenommen wurde, wird das Elektromagnetventil 1 durch Umspritzung mit dem Außengehäuse 2 fertig gestellt. Hierbei wird zwischen dem Außengehäuse 2 und dem Spulenträger 5 eine Kontur vorgesehen, die eine Art labyrinthförmige Abdichtung 27 schafft, um die Dichtwirkung gegenüber der Atmosphäre zu erhöhen.

Im vorliegenden Fall wird das Elektromagnetventil dann durch das Anordnen von Kern 3, Anker 4 und den zugehörigen Bauteilen wie einer Feder 14, die im vorliegenden Fall den Anker 4 unter Vorspannung hält, sowie einem Anschlagstift 15, der einstellbar im Kern 3 angeordnet ist, fertiggestellt. Hierbei ist es für die Positionierung hilfreich, wenn sowohl ein vom Anker 4 entgegengesetzter Bereich des Kernes 3 einen größeren Durchmesser aufweist als ein dem Ventilverschlussglied 16 entgegengesetzter Bereich des Spulenträgers 5.

Im vorliegenden Ausführungsbeispiel werden Lagermittel 20 für den Anker 4 durch den Spulenträger 5 gebildet, wobei der Lagerbereich 21 im Wesentlichen mit dem Bereich übereinstimmt, in dem der Rückschlussinnenabschnitt 9 vorgesehen sind. Diese Ausführungsform wir dadurch ermöglicht, dass ein erstes, zum Kern gerichtetes Teilstück 4a des Ankers 4 einen größeren Durchmesser aufweist, als der Innendurchmesser eines Teilbereiches 21 des Spulenträgers 5. Neben des großen Montagevorteils ergibt sich hierdurch der Vorteil, dass der Lagerbereich 21 des Spulenträgers 5 durch das Einbringen des Rückschlussinnenabschnittes 9 zwangsläufig verstärkt ist. Durch das Aufbringen einer Gleitschicht im Lagerbereich 21 ist ein möglichst widerstandsfreies Gleiten des Ankers im Spulenträger gewährleistet. Die koaxiale Führung des Ankers 4 im Elektromagnetventil ist durch die Doppelfunktion des Spulenkörpers 5, der einerseits den Kern 3 aufnimmt und andererseits als Lagermittel für den Anker 6 fungiert, gewährleistet.

Es ist natürlich auch möglich eine nicht weiter dargestellte Lagerbuchse im Bereich 21 vor zu sehen.

Zur Endmontage muss dann lediglich der für die Ventilfunktion ausgewählte Ventilstößel 10 auf den Anker 4 aufgesteckt werden, so dass eine Steckverbindung 24 hergestellt ist. Hierzu weist der Anker 4 einen Zapfen 25 auf der in eine Aussparung 26 des Ventilstössels 10 einsteckbar ist und damit kraft- oder formschlüssig mit diesem verbunden ist. Dabei kann der Zapfen 25 noch eine nicht weiter dargestellte Rändelung besitzen durch die die Hubhöhe einstellbar ist. Im vorliegenden Ausführungsbeispiel wird der Ventilstößel 10 zusammen mit der Ventilhülse 22 in der Endmontage montiert.

Dadurch, dass in diesem Fall ein Teil des Spulenträgers 5 als Aufnahmebuchse 23 für die Ventilhülse 22 ausgebildet ist, können Koaxialitätsfehler vermindert werden. Es hat sich als vorteilhaft erwiesen, dass der Spulenträger 5 aus einem form- und temperaturstabilen Werkstoff, beispielsweise unter dem Markenzeichen Grivory HT2V 3HLV, Grivory XE388, PPA oder PA 4.6, hergestellt ist.

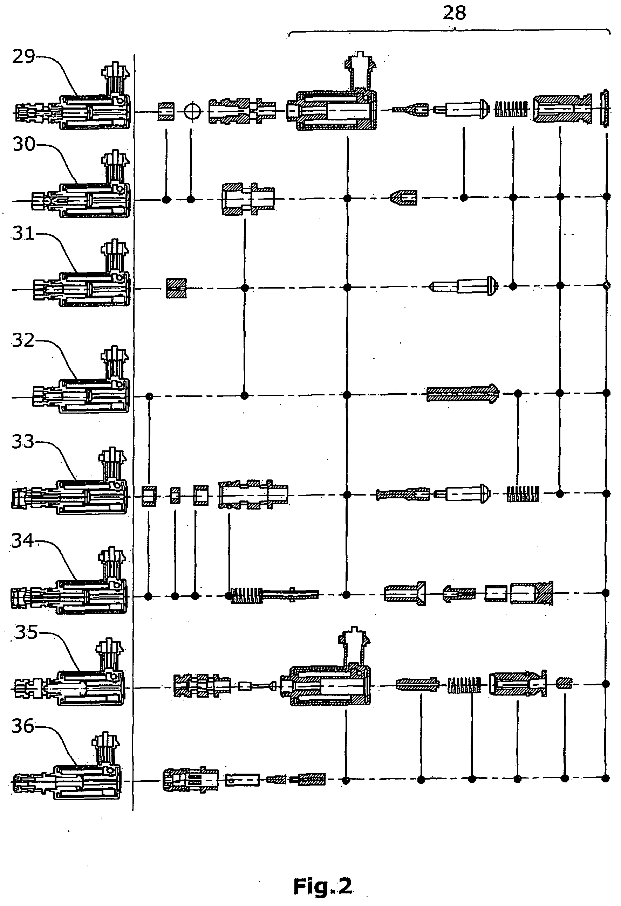

Figur 2 zeigt nun schematisch eine Baugruppenzeichnung für verschiedene Elektromagnetventile die einen Baukasten bilden, wie zum Beispiel Druckbegrenzungsventile, Schieberventile und Sitzventile.

Der Baukasten besteht hierbei aus einem später näher erläuterten Standardspulenbauteil, das als Mehrfachverwendungsteil in Ventile mit unterschiedlichem hydraulischem Aufbau einfließen soll. Dadurch wird die Stückzahl der Standardspulenbauteile erhöht, der Werkzeugkostenanteil pro Stück geringer und die Spule in Summe kostengünstiger. Das Standardspulenbauteil ist das zentrale Element dieses Ventil-Baukastens. Die unterschiedlichen hydraulischen Aufgaben können einerseits durch unterschiedliche Einbauteile im Standardspulenbauteil (Anker, Kern, Feder), andererseits durch spezielle Anbauteile an die Standardspule gelöst werden.
Im Einzelnen soll die Standardspule für folgende hydraulischen Ventile verwendet werden:
- 3/2-Wege-Ventil (29), Bauart "Kugelventil" ohne Druckausgleich,
- 2/2-Wege-Ventil (30), Bauart "Kugelventil" ohne Druckausgleich,
- 2/2-Wege-Ventil (31), Bauart "Schieberventil" mit Druckausgleich,
- 2/2-Wege-Absperrventil ohne Druckausgleich (32),
- 3/2-Wege-Ventil (33), Funktion "stromlos geschlossen" mit Druckausgleich,
- 3/2-Wege-Ventil (34), Funktion "stromlos offen" mit Druckausgleich,
- Öldruckmodulator bzw. Proportionaldruckventil (35) in Bauart "Sitzventil",
- Öldruckmodulator bzw. Proportionaldruckventil (36) in Bauart "Schieberventil",
wobei weitere Varianten in der Zukunft natürlich möglich sind.

Für alle aufgezählten Ventile sind als Strömungsmedien bevorzugt Öl, Kraftstoffe, usw. vorgesehen. Der Aufbau des sogenannten Standardspulenbauteiles umfasst im Wesentlichen die unter Figur 1 genannten Teile Spulenträger 5, Wicklung 6, Rückschlussanordnung 7 sowie Außengehäuse 2 inklusive Elektrostecker 19. Das Standardspulenbauteil ist in Achsrichtung beidseitig offen und erlaubt sowohl den Einbau von elektromagnetischen Funktionsteilen in das Bauteil von der Steckerseite aus, als auch den Anbau von hydraulischen Funktionsteilen an der gegenüber liegenden Seite des Standardspulenbauteiles.

Elektromagnetische Funktionsteile sind allgemein Anker, Kern und Feder. Zusammen mit dem Standardspulenbauteil ergibt sich daraus ein elektromagnetische Antrieb 28. Unterschiedliche hydraulische Anwendungen erfordern unterschiedliche elektromagnetische Antriebe bzw. Antriebscharakteristiken, die sich in Höhe und Verlauf der Magnetkraft (über Ventilhub) unterscheiden. Für unterschiedliche Magnetkraftcharakteristiken müssen bei gleichem Standardspulenbauteil die Teile Anker, Kern und Feder aufeinander abgestimmt werden. Das Standardspulenbauteil erlaubt den Einbau dieser unterschiedlichen Teile von der "Steckerseite" her.

Die eingespritzten magnetischen Rückschlussinnen- und Rückschlussdeckelabschnitte bilden einen stufenförmigen Absatz innerhalb der Spule, der gleichzeitig eine Montageerleichterung darstellt. Alle vorgesehenen Anker bestehen aus einem zylindrischen Teil, das sich innerhalb der Rückschluss-Führung entsprechend dem Ventilhub in Längsrichtung bewegt, und einem magnetisch wirksamen Teil mit grösserem Durchmesser. Diese Durchmessererweiterung verhindert zusammen mit der Stufe innerhalb des Standardspulenbauteils das Herausfallen des Ankers während der Montage des Magnetventils bzw. des elektromagnetischen Antriebs.

Nachfolgende Vormontagefolge ist beispielsweise möglich:
1) Einbau des Ankers in Standardspulenbauteil mit Auflage Ankerkopf auf der Stufe innerhalb der Spule
2) Einbau der Feder
3) Einbau des Kerns inkl. Anschlag
Danach wäre der elektromagnetische Antrieb im Grundaufbau komplett montiert. Einfache On-off-Ventile bzw. 2/2-Wege- und 3/2-Wege-Ventile könnten bereits passgenau montiert werden, während für Regelventile (Modulatoren, Proportionalventile) dies nur ein erster Montageschritt vor dem abschließenden Einstellvorgang des Komplettventils wäre.

Das Standardspulenbauteil hat an dem dem Stecker gegenüber liegenden Ende eine Aufnahmebuchse, die letztlich Bestandteil des Spulenkörpers ist. Mit Hilfe dieser Aufnahmebuchse können unterschiedliche hydraulische Funktionsteile in Form einer Ventilhülse befestigt werden. Das äussere Gehäuse dieser Ventilhülse kann aus unterschiedlichen Werkstoffen wie Stahl, Aluminium und Kunststoffen wie PA, PPA, PPS usw. hergestellt sein.

Nach Auswahl der geeigneten Ventilhülse und deren Zusammenstellung findest dann in der Endmontage die Verbindung von Ventilhülse und Standardspulenbauteil statt. Als Verbindungstechniken zwischen Ventilhülse und Standardspulenbauteil kommen im Wesentlichen 3 Verfahren in Betracht:
- Einpressen der Ventilhülse in die Aufnahmebuchse des Standardspulenbauteils,
- Vibrations- oder Ultraschall-Verschweissungsverbindung zwischen der Ventilhülse und der Aufnahmebuchse des Standardspulenbauteils,
- Laserschweissverbindung zwischen der Ventilhülse und der Aufnahmebuchse des Standardspulenbauteils.

## Patentansprüche

1. Elektromagnetventil mit einem Gehäuse (2), in dem eine auf einen Spulenträger (5) gewickelte Spule (6), ein Anker (4), ein Kern (3) und eine mehrteilige Rückschlussanordnung (7) angeordnet sind, die einen elektromagnetischen Kreis bilden, wobei der bewegliche Anker (6) über Lagermittel (20) in dem Spulenträger (5) gelagert ist und direkt oder indirekt auf mindestens ein Ventilverschlussglied (16) einwirkt, wobei das Ventilverschlussglied (16) auf mindestens einen, in einer Ventilhülse (22) angeordneten Ventilsitz (18) angreift, wobei
der Kern (3) an einer der Ventilhülse (22) entgegengesetzten Seite des Gehäuses (2) angeordnet ist und der Anker (4) aus mehreren Teilstücken aufgebaut ist, wobei ein erstes, zum Kern gerichtetes Teilstück (4a) einen größeren Durchmesser aufweist, als der Innendurchmesser eines Teilbereiches (21) des Spulenträgers (5), wobei der Spulenträger (5) an einer dem Kern (3) entgegengesetzten Seite eine Aufnahmebuchse (23) für die Ventilhülse (22) aufweist, wobei der Spulenträger (5) und die Aufnahmebuchse (23) einstückig ausgeführt sind, **dadurch gekennzeichnet, dass** ein Ventilstößel (10) über eine Steckverbindung (24) mit dem Anker (4) verbindbar ist und der Ventilstößel (10) in der Ventilhülse (22) läuft.

2. Elektromagnetventil nach Anspruch 1, **dadurch gekennzeichnet, dass** zumindest Teile der Rückschlussanordnung (7) im Spulenträger (5) angeordnet sind.

3. Elektromagnetventil nach Anspruch 1 oder 2, **dadurch gekennzeichnet, dass** ein vom Anker (4) entgegengesetzter Bereich des Kernes (3) einen größeren Durchmesser aufweist, als ein dem Ventilverschlussglied (16) entgegengesetzter Bereich des Spulenträgers (5).

4. Elektromagnetventil nach einem der vorhergehenden Ansprüche, **dadurch gekennzeichnet, dass** die Steckverbindung (24) einstellbar ist.

5. Elektromagnetventil nach einem der vorhergehenden Ansprüche, **dadurch gekennzeichnet, dass** die Aufnahmebuchse (23) und die Ventilhülse (22) mittels einer Schweißverbindungsstelle miteinander verbunden sind.

6. Elektromagnetventil nach einem der vorhergehenden Ansprüche, **dadurch gekennzeichnet, dass** der Teilbereich (21) des Spulenträgers (5) eine Lagerbuchse (20) für den Anker (4) aufweist.

7. Elektromagnetventil nach einem der Ansprüche 1 - 5, **dadurch gekennzeichnet, dass** der Teilbereich (21) des Spulenträgers (5) als Lagerbereich (20) für den Anker (4) ausgebildet ist.

8. Elektromagnetventil nach einem der vorhergehenden Ansprüche, **dadurch gekennzeichnet, dass** der Spulenträger (5) im Spritzgussverfahren hergestellt ist.

9. Elektromagnetventil nach einem der vorhergehenden Ansprüche, **dadurch gekennzeichnet, dass** der Spulenträger (5) aus einem form- und temperaturstabilen Werkstoff, beispielsweise unter dem Markenzeichen Grivory HT2V-3H LF oder Grivory XE3881, hergestellt ist.

## Claims

1. A solenoid valve comprising a housing (12) within which are arranged:
a coil (6) wound onto a coil former (5), an armature (4), a core (3) and a multi-part return-path arrangement (7), which form an electromagnetic circuit, wherein the movable armature (4) is mounted in the coil former (5) via bearing means (20) and acts directly or indirectly on the at least one valve closure element (16), wherein the valve closure element (16) engages at least one valve seat (18) arranged in a valve sleeve (22), wherein the core (3) is arranged on a side of the housing (2) opposite to the valve sleeve (22) and the armature (4) is formed of a plurality of parts, wherein a first part (4a) directed toward the core has a diameter larger than the internal diameter of a portion (21) of the coil former (5), wherein the coil former (5) comprises a receiving bushing (23) for the valve sleeve (22) arranged on a side opposite to the core (3), the coil former (5) and the receiving bushing (23) being configured in one piece, **characterized in that** a valve tappet (10) is adapted to be connected with the armature (4) via a plug-in connector (24) and the valve tappet (10) moves in the valve sleeve (22).

2. The solenoid valve as recited in claim 1, **characterized in that** at least parts of the return-path arrangement (7) are arranged in the coil former (5).

3. The solenoid valve as recited in claim 1 or 2, **characterized in that** a portion of the core (3) arranged opposite to the armature (4) comprises a diameter which is larger than the diameter of a portion of the coil former (5) arranged opposite to the valve closure element (16).

4. The solenoid valve as recited in one of the preceding claims, **characterized in that** the plug connection (24) is configured to be adjustable.

5. The solenoid valve as recited in recited in one of the preceding claims, **characterized in that** the receiving bush (23) and the valve sleeve (22) are connected by a welding joint.

6. The solenoid valve as recited in one of the preceding claims, **characterized in that** the portion (21) of the coil former (5) comprises a bearing bush (20) for the armature (4).

7. The solenoid valve as recited in one of claims 1-5, **characterized in that** the portion (21) of the coil former (5) is configured as a bearing portion (20) for the armature (4).

8. The solenoid valve as recited in one of the preceding claims, **characterized in that** the coil former (5) is formed using an injection molding process

9. The solenoid valve as recited in one of the preceding claims, **characterized in that** the coil former (5) is formed from a dimensionally and temperature stable material, for example from Grivory® HT2V-3H LF or Grivory® XE3881.

## Revendications

1. Electrovanne avec un carter (2) dans lequel sont disposés une bobine (6) enroulée sur un porte-bobine (5), une armature (4), un noyau (3) et une tôle de retour de fluxe (7) en plusieurs parties, formant un circuit électromagnétique, ladite armature (4) mobile étant supportée dans le porte-bobine (5) par des moyens de support (20) et agissant directement ou indirectement sur au moins un élément de fermeture de vanne (16), ledit élément de fermeture de vanne (16) engageant sur au moins un siège de soupape (18) disposé dans une douille de soupape (22), ledit noyau (3) étant situé sur le côté du carter (2) opposé à la douille de soupape (22) et l'armature (4) étant formée par plusieurs parties, dont une première partie orientée vers le noyau a un diamètre supérieur au diamètre intérieur d'une portion (21) du porte-bobine (5), le porte-bobine (5) comprenant, sur le côté opposé au noyau (3), une douille réceptrice (23) pour la douille de soupape (22), ledit porte bobine (5) et ladite douille réceptrice (23) étant formées en une seule pièce, **caractérisée en ce qu'**un poussoir de soupape (10) peut être connecté avec ladite armature (4) par une connexion par enfoncement (24) et le poussoir de soupape (10) se déplace dans pour la douille de soupape (22).

2. Electrovanne selon la revendication 1, **caractérisée en ce qu'**au moins des parties de la tôle de retour de fluxe (7) sont disposées dans ledit porte-bobine (5).

3. Electrovanne selon la revendication 1 ou 2, **caractérisée en ce qu'**une portion du noyau (3) opposée à l'armature (4) a un diamètre supérieur à celui d'une portion dudit porte-bobine (5) opposée à l'élément de fermeture de vanne (16)

4. Electrovanne selon l'une quelconque des revendications précédentes, **caractérisée en ce que** la connexion par enfoncement (24) est ajustable.

5. Electrovanne selon l'une quelconque des revendications précédentes, **caractérisée en ce que** la douille réceptrice (23) et la douille de soupape (22) sont reliées l'une à l'autre par un point de liaison par soudure.

6. Electrovanne selon l'une quelconque des revendications précédentes, **caractérisée en ce que** la portion (21) du porte-bobine (5) comprend un coussinet (20) pour ladite armature (4).

7. Electrovanne selon l'une quelconque des revendications 1 - 5, **caractérisée en ce que** la portion (21) du porte-bobine (5) est réalisée comme une section de roulement (20) pour ladite armature (4).

8. Electrovanne selon l'une quelconque des revendications précédentes, **caractérisée en ce que** le porte-bobine (5) est réalisée par un procédé de moulage par injection.

9. Electrovanne selon l'une quelconque des revendications précédentes, **caractérisée en ce que** le porte-bobine (5) est réalisée d'une matière indéformable et thermostable, par exemple de Grivory® HT2V-3H LF or Grivory® XE3881.
